(19) Europäisches Patentamt

European Patent Office

Office européen des brevets

(11) EP 1 508 868 A2

(12) EUROPEAN PATENT APPLICATION

(43) Date of publication:
23.02.2005 Bulletin 2005/08

(51) Int Cl.$^7$: G06F 17/60

(21) Application number: 04019413.6

(22) Date of filing: 16.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 20.08.2003 JP 2003296929

(71) Applicant: NEC CORPORATION
Tokyo (JP)

(72) Inventor: Hosokawa, Taisuke
Tokyo (JP)

(74) Representative: Betten & Resch
Patentanwälte,
Theatinerstrasse 8
80333 München (DE)

(54) Consumer behavior information collecting system, method and program

(57)    A consumer behavior information collecting system (1) is provided which is capable of easily and widely collecting information about positions of consumers. A portable terminal ($2_1$, $2_2$, ···, $2_r$) transmits position information to an information management center (4). The information management center (4) accumulates received position information and increases the number of points being kept by a user ($A_1$, $A_2$, ···, $A_r$) based on frequency of transmission of position information and presents information about merchandise that corresponds to the number of points being kept by the user ($A_1$, $A_2$, ···, $A_r$) and meets conditions set by the user ($A_1$, $A_2$, ···, $A_r$). The information management center (4), when having received merchandise selected information from a portable terminal ($2_1$, $2_2$, ···, $2_r$), determines supply of requested merchandise in consideration of the number of points, performs specified statistical processing according to accumulated position information and corresponding time information and personal information of the user ($A_1$, $A_2$, ···, $A_r$), and produces behavior information to be used for marketing research and a like.

FIG.2

1:behavior information collecting system

**Description**

BACKGROUND OF THE INVENTION

Field of the Invention

The present invention relates to a consumer behavior information collecting system to generate consumer behavior information, which are put to work for, for example, marketing research or a like, by acquiring information about positions of many consumers in real time, a consumer behavior information collecting method using the above consumer behavior information collecting system, and a consumer behavior information collecting program to execute the above consumer behavior information collecting method.

The present application claims priority of Japanese Patent Application No. 2003-296929 filed on August 20, 2003, which is hereby incorporated by reference.

Description of the Related Art

Conventionally, for example, when a company plans to newly set up a store or to sell new merchandise in a market, the company first does marketing research of its own and judges, based on results from the research, whether the merchandise can find acceptance in the market. For example, the company, in advance, analyzes data on its past sales and/or newly conducts a survey by questionnaires to keep track of trends of wants and/or tastes of consumers and/or conducts research on states of affairs at competitive stores in a targeted area.

However, this method has a problem. That is, to increase more accuracy in such the research, it costs more. Moreover, considerable time has to be spent before the research result is obtained and it is difficult to draw conclusions within a short time. In recent years, a mobile terminal such as a portable cellular phone or a like becomes widespread, technology in which, by using information about a position of a mobile terminal, advertisement information is transmitted to a mobile terminal existing in a specified area is proposed in, for example, Japanese Patent Application Laid-open No. 2001-359166 and another technology in which, according to information about a position of a mobile terminal, information about a store or a like that can satisfy user's demands is received by the mobile terminal is proposed in, for example, Japanese Patent Application Laid-open No. 2002-51383. Thus, by collecting information about positions of consumers and obtaining information about behavior of consumers using a mobile terminal, information about a degree of congestion or its change in terms of time in a specified spot or area is acquired which is put to work for a marketing research or a like.

Problems to be solved are that, when the above technology using a mobile terminal is to be used for a marketing research or a like, consumers are not fully motivated to supply information about their positions constituting private information unless they can have clear objectives, which makes it difficult to widely collect information from consumers and, as a result, difficult to increase accuracy in the marketing research or a like.

SUMMARY OF THE INVENTION

In view of the above, it is an object of the present invention to provide a consumer behavior information collecting system, method and program which are capable of easily and widely collecting information about positions of consumers at low costs and in a short time, which can surely provide exact information about behavior of consumers with high accuracy.

According to a first aspect of the present invention, there is provided a consumer behavior information collecting system including:

two or more mobile terminals to be used by two or more consumers; and
an information processing device to be used by a behavior information collector who collects behavior information of the two or more consumers;

wherein the two or more mobile terminals are connected via a network to the information processing device;
wherein each of the two or more mobile terminals includes:

a GPS (Global Positioning System) signal receiving means (14) to receive radio signals from GPS satellites;
a position information acquiring means to acquire position information of each of the two or more mobile terminals according to the radio signals; and
a position information transmitting means to transmit the position information via the network to the information processing device; and

wherein the information processing device includes:

a behavior information acquiring means to acquire the position information transmitted via the network from each of the two or more mobile terminals and to obtain behavior information of each of the two or more consumers; and
a bonus paying processing means to pay a bonus to each of the two or more consumers in exchange for supply of the position information.

In the foregoing, a preferable mode is one wherein the behavior information obtained by the behavior information acquiring means is supplied to an information receiver in exchange for a specified counter value.

Also, a preferable mode is one wherein the bonus paying processing means presents contents of the bonus depending on a degree of contribution of the position information transmitted from each of the two or more mobile terminals for collection of the behavior information.

Also, a preferable mode is one wherein the bonus paying processing means issues, as the bonus, service points that can be appropriated for a part or whole of a counter value of specified merchandise or service.

Also, a preferable mode is one wherein the bonus paying processing means determines contents of the bonus to be presented depending on frequency of receiving the position information fed from each of the two or more mobile terminals.

Also, a preferable mode is one wherein the behavior information acquiring means produces the behavior information of each of the two or more consumers, according to the position information, corresponding time information, and personal information of corresponding consumer.

Also, a preferable mode is one wherein each of the two or more mobile terminals transmits, together with the position information, additional information about at least consuming actions of each of the two or more consumers to the information processing device.

Also, a preferable mode is one wherein the behavior information acquiring means performs specified statistical processing including a summing process according to the accumulated position information of a great number of the consumers to produce the behavior information of the two or more consumers.

Also, a preferable mode is one wherein the bonus paying processing means, when each of the two or more mobile terminals is located within a specified area, supplies service information, as the bonus, to each of the two or more mobile terminals.

Furthermore, a preferable mode is one wherein the bonus paying processing means supplies the service information fed from a service information supplier and advertisement information of the service information supplier to each of the two or more mobile terminals in exchange for a specified counter value.

According to a second aspect of the present invention, there is provided a consumer behavior information collecting method including:

a process of connecting two or more mobile terminals to be used by two or more consumers, via a network, to an information processing device to be used by a behavior information collector who collects behavior information of the two or more consumers;

wherein each of the two or more mobile terminals performs GPS signal receiving processing to receive radio signals fed from GPS satellites, position information acquiring processing to acquire position information of each of the two or more mobile terminals according to the radio signals, and position information transmitting processing to transmit the position information via the network to the information processing device; and

wherein the information processing device performs behavior information acquiring processing to acquire the position information transmitted via the network from each of the two or more mobile terminals and to obtain behavior information of the two or more consumers and bonus paying processing to pay a bonus to the two or more consumers in exchange for supply of the position information.

In the foregoing, a preferable mode is one wherein the behavior information acquired by the behavior information acquiring processing is supplied to an information supplier in exchange for a specified counter value.

Also, a preferable mode is one wherein the information processing device, by the bonus paying processing, presents contents of the bonus depending on a degree of contribution of the position information transmitted from each of the two or more mobile terminals for collection of the behavior information.

Also, a preferable mode is one wherein the information processing device, by the bonus paying processing, issues, as the bonus, service points that can be appropriated for a part or whole of a counter value of specified merchandise or service, in accordance with the degree of contribution.

Also, a preferable mode is one wherein the information processing device, by the bonus paying processing, determines contents of the bonus to be presented depending on frequency of receiving the position information to be fed from each of the two or more mobile terminals.

Also, a preferable mode is one wherein the information processing device, by the behavior information acquiring processing, produces the behavior information of each of the two or more consumers, according to the position information, corresponding time information, and personal information of corresponding consumer.

Also, a preferable mode is one wherein each of the two or more mobile terminals, by the position information transmitting processing, transmits, together with the position information, additional information about at least consuming actions of each of the consumers to the behavior information processing device.

Also, a preferable mode is one wherein the information processing device, by the behavior information acquiring processing, performs specified statistical processing including a summing process according to the accumulated position information of a great number of the consumers to produce the behavior information of the two or more consumers.

Also, a preferable mode is one wherein the information processing device, by the bonus paying processing, when each of the two or more mobile terminals is located within a specified area, supplies service information, as the bonus, to each of the two or more mobile terminals.

Furthermore, a preferable mode is one wherein the information processing device, by the bonus paying processing, supplies the service information fed from a service information supplier and advertisement information of the service information supplier to each of the two or more mobile terminals in exchange for a specified counter value.

According to a third aspect of the present invention, there is provided a consumer behavior information collecting program to have a computer execute a consumer behavior information collecting method, the method including:

a process of connecting two or more mobile terminals to be used by two or more consumers, via a network, to an information processing device to be used by a behavior information collector who collects behavior information of the two or more consumers;

wherein each of the two or more mobile terminals performs GPS signal receiving processing to receive radio signals fed from GPS satellites, position information acquiring processing to acquire position information of each of the two or more mobile terminals according to the radio signals, and position information transmitting processing to transmit the position information via the network to the information processing device; and

wherein the information processing device performs behavior information acquiring processing to acquire the position information transmitted via the network from each of the two or more mobile terminals and to obtain behavior information of the two or more consumers and bonus paying processing to pay a bonus to the two or more consumers in exchange for supply of the position information.

With the above configuration, a consumer can be paid a bonus by supplying position information to a behavior information collector and, therefore, the behavior information collector can easily and widely collect position information from consumers, which enables the behavior information collector to surely obtain information about behavior of consumers at low costs and in a short time and to construct a database according to exact and accurate information about the behavior of consumers. As a result, a highly accurate marketing research can be conducted at low costs and in a short time. A behavior information collector can obtain a counter value by supplying data-based information about behavior of consumers to a specified acceptor of information. An acceptor of information about behavior of consumers can, for example, make up a managerial strategy using the supplied information.

Moreover, a behavior information collector can get a fee from a service information supplier by supplying service information fed from the service information supplier and by supplying information about advertisement for a service information supplier to a mobile terminal, and the service information supplier can put the supply of service and advertisement information to work for sales promotion of its merchandise and/or service and, by supplying advertisement information to a mobile terminal in a specified area, can effectively provide advertisement information requiring immediacy at low costs

Moreover, according to the present invention, as a mobile terminal, besides a portable cellular phone or a PHS (Personal Handyphone System), a means constructed by adding a wireless communication function to a vehicle-mounted terminal such as a car navigation system or a like can be also used.

BRIEF DESCRIPTION OF THE DRAWINGS

The above and other objects, advantages, and features of the present invention will be more apparent from the following description taken in conjunction with the accompanying drawings in which:

Fig. 1 is a schematic block diagram showing configurations of a behavior information collecting system according to a first embodiment of the present invention;

Fig. 2 is also a schematic block diagram showing configurations of the behavior information collecting system according to the first embodiment of the present invention;

Fig. 3 is a schematic block diagram showing configurations of a mobile terminal in the behavior information collecting system of the first embodiment of the present invention;

Fig. 4 is a schematic block diagram showing an information management center in the behavior information collecting system of the first embodiment of the present invention;

Fig. 5 is a schematic block diagram showing a behavior information management server in the information management center of the first embodiment of the present invention;

Fig. 6 is a block diagram explaining contents stored in a storing section in a behavior information database server in the information management center of the first embodiment of the present invention;

Fig. 7 is a diagram explaining contents stored in a point information management server in the information management center of the first embodiment of the present invention;

Fig. 8 is a schematic block diagram showing configurations of a monitoring terminal in the information management center of the first embodiment of the present invention;

Fig. 9 is a schematic block diagram showing configurations of a communication management center in the behavior information collecting system of the first embodiment of the present invention;

Fig. 10 is a processing procedure diagram explaining operations of the behavior information collecting system of the first embodiment of the present invention;

Fig. 11 is a diagram explaining operations of the behavior information collecting system of the first embodiment of the present invention;

Fig. 12 is a schematic block diagram showing configurations of a behavior information collecting system according to a second embodiment of the present invention;

Fig. 13 is a schematic block diagram showing an information management center in the behavior information collecting system of the second embodiment of the present invention;

Fig. 14 is a diagram explaining contents stored in a storing section in a behavior information management server in the information management center of the second embodiment of the present invention;

Fig. 15 is a processing procedure diagram explaining operations of the behavior information collecting system of the second embodiment of the present invention; and

Fig. 16 is a diagram explaining operations of the behavior information collecting system of the second embodiment of the present invention.

DETAILED DESCRIPTION OF THE PREFERRED EMBODIMENTS

Best modes of carrying out the present invention will be described in further detail using various embodiments with reference to the accompanying drawings.

First Embodiment

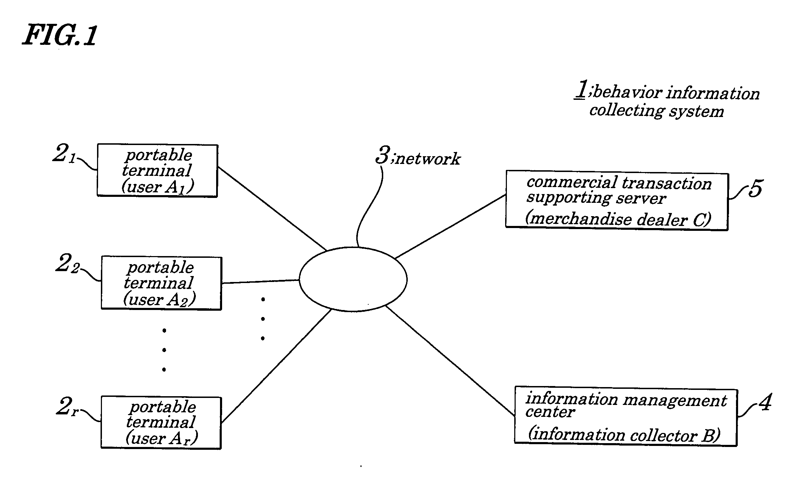

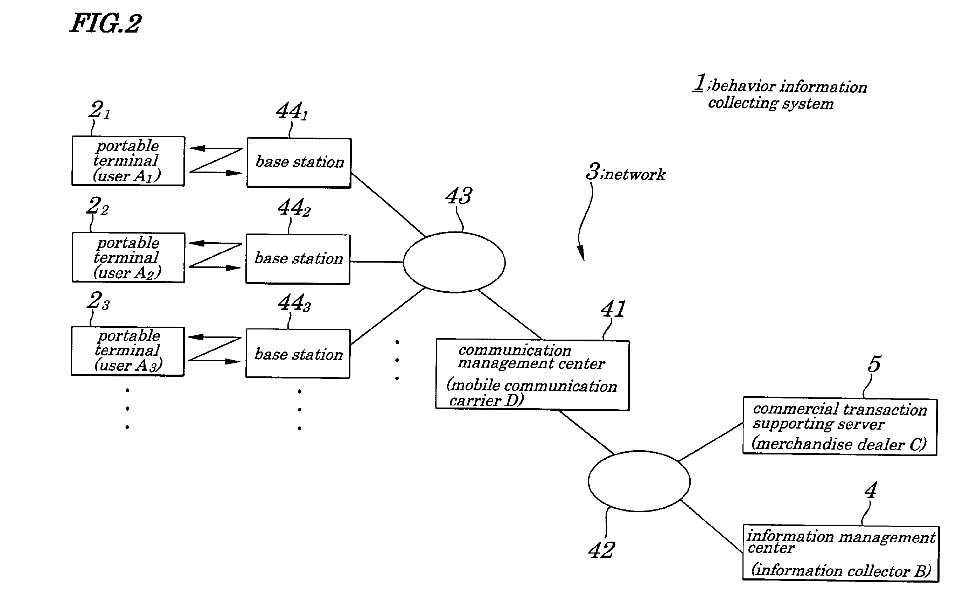

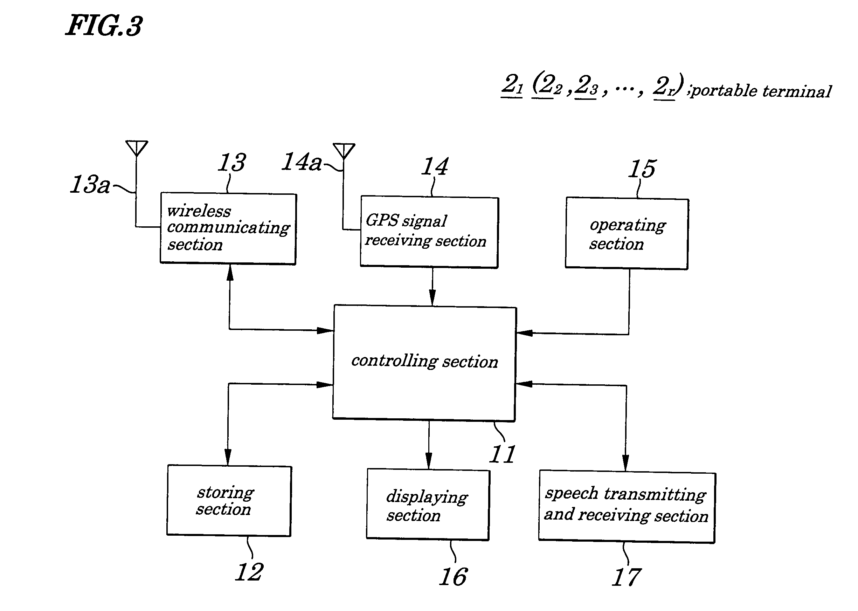

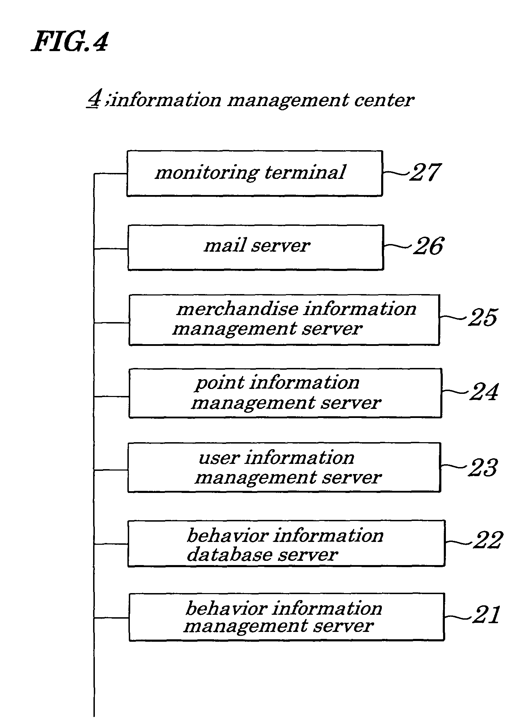

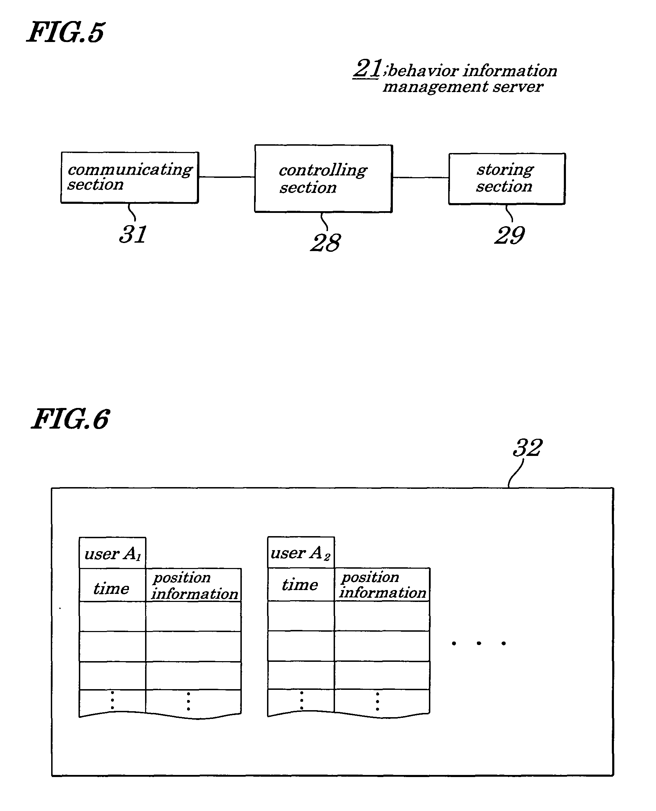

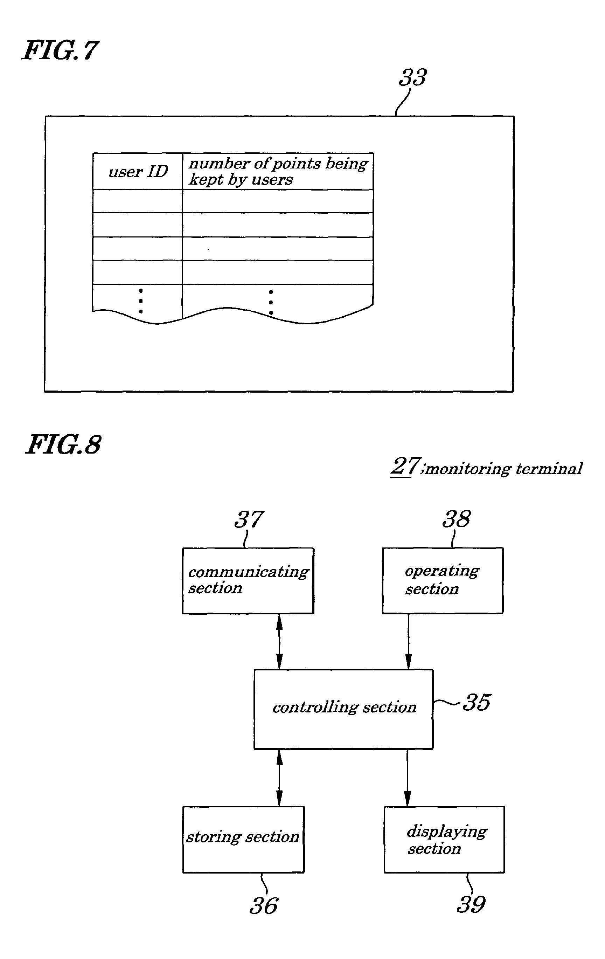

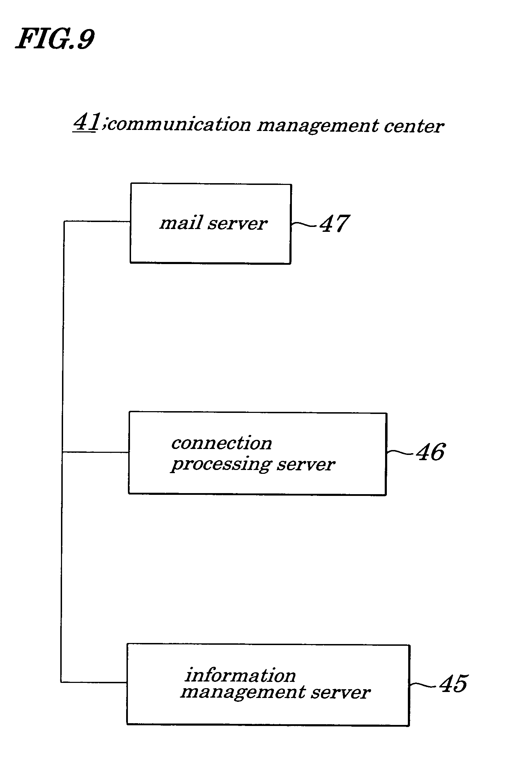

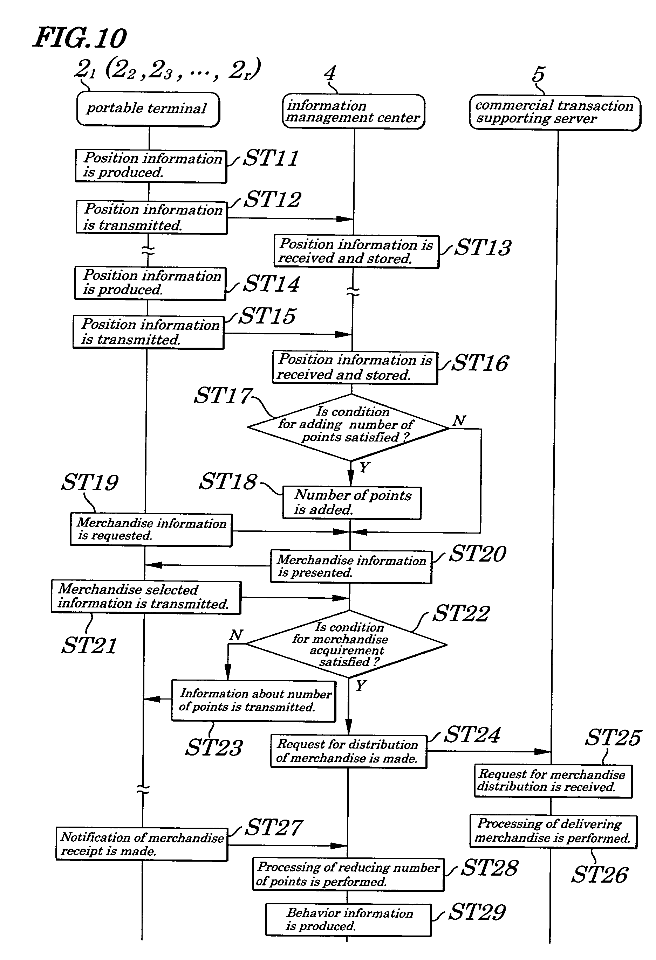

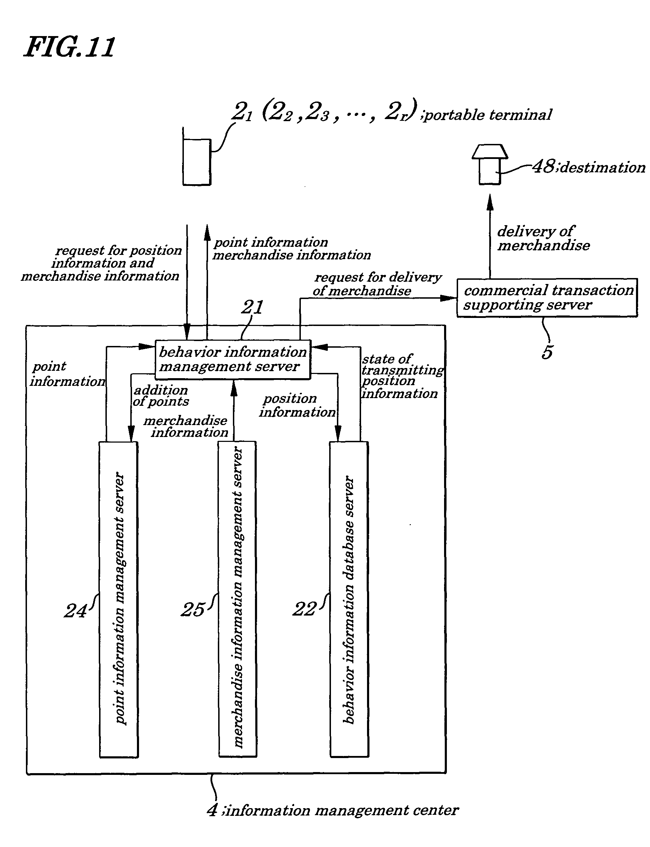

Figure 1 is a schematic block diagram showing configurations of a behavior information collecting system according to a first embodiment of the present invention. Figure 2 is also a schematic block diagram showing configurations of the behavior information collecting system of the first embodiment. Figure 3 is a schematic block diagram showing configurations of a mobile terminal in the behavior information collecting system of the first embodiment. Figure 4 is a schematic block diagram showing an information management center in the behavior information collecting system of the first embodiment. Figure 5 is a schematic block diagram showing a behavior information management server in the information management center of the first embodiment. Figure 6 is a diagram explaining contents stored in a storing section in a behavior information database server in the information management center of the first embodiment. Figure 7 is a diagram explaining contents stored in a point information management server in the information management center of the first embodiment. Figure 8 is a schematic block diagram showing configurations of a monitoring terminal in the information management center of the first embodiment. Figure 9 is a schematic block diagram showing configurations of a communication management center in the behavior information collecting system of the first embodiment. Figure 10 is a processing procedure diagram explaining operations of the behavior information collecting system of the first embodiment. Figure 11 is a diagram explaining operations of the behavior information collecting system of the first embodiment. The behavior information collecting system (consumer behavior information collecting system) 1, as shown in Figs. 1 and 2, includes portable terminals (mobile terminals) $2_1$, $2_2$, ⋯, $2_r$ of portable cellular phones used by many users (consumers) $A_1$, $A_2$, ⋯, $A_r$ ("r" is an arbitrary natural number being 2 or more) or a like, an information management center (information processing device) 4 being connected to the portable terminals $2_1$, $2_2$, ⋯, $2_r$ via a network 3 and being managed by an information collector (behavior information collecting company) B, and a commercial transaction supporting server 5 being connected to the information management center 4 via the network 3 and to be used by a merchandise dealer (merchandise dealing company) C.

Each of the portable terminals $2_1$ ($2_2$, $2_3$, ⋯, $2_r$), as shown in Fig. 3, chiefly includes a controlling section (position information acquiring means) 11, a storing section 12, a wireless communicating section (position information transmitting means) 13, a GPS (Global Positioning System) signal receiving section (GPS signal receiving means) 14, an operating section 15, a displaying section 16, and a speech transmitting and receiving section 17.

The controlling section 11 is made up of a CPU (Central Processing Unit) or a like and executes a variety of processing programs stored in the storing section 12 including a communication control program, a position information producing program that is used to produce position information of a portable terminal by using a GPS method to be performed by a global Positioning system according to radio signals fed from three or more GPS satellites, a position information transmitting program used to transmit specified position information, a browser being a program used to browse a homepage, mailer being a program used to create, receive or transmit electronic mail (e-mail), or a like, and controls each of components making up a main body of a portable terminal.

The controlling section 11 runs the above position information producing program to produce position information, according to a radio signal received via the GPS signal receiving section 14 consisting of information about a longitude, latitude, or a like and then runs a position information transmitting program to transmit, via the wireless communicating section 13, the produced position information to the information management center 4 (Figs. 1, 2) in a specified period preset by an operation of a user $A_1$ ($A_2$, $A_3$, ⋯, $A_r$). Here, by an operation of the user $A_1$ ($A_2$, $A_3$, ⋯, $A_r$), the position information may be automatically transmitted in a predetermined time band or the position information may be automatically, every time an operation of the user $A_1$ ($A_2$, $A_3$, ⋯, $A_r$) is performed, for a specified period of time following the operation.

The storing section 12 is made up of a semiconductor memory such as a ROM (Read Only Memory), RAM (Random Access Memory), or a like and stores the communication control program, position information producing program, various processing programs including a browser, mailer, or a like to be run by the controlling section 11 and/or various kind of information including received information or a like and has various registers and/or flags to be used when the programs are executed by the controlling section 11.

The wireless communicating section 13 modulates a voice or data to transmit it to a nearest base station $44_1$ ($44_2$, $44_3$, ⋯, $44_r$)making up the network 3 as a radio signal via an antenna 13a, receives a radio signal transmitted from the base station $44_1$ ($44_2$, $44_3$, ⋯, $44_r$) via the antenna 13a and demodulates it into a voice or data. Moreover, the GPS signal receiving section 14 receives radio signals from three or more GPS satellites via the antenna 14a.

On a front of the operating section 15 are mounted a mail mode selecting key (not shown) used to create, receive, or transmit e-mail, a speech mode selecting key (not shown) used to make a voice phone speech, a browser mode selecting key (not shown) used to boot a browser and to browse a homepage, a clear key (not shown) used to make a standby screen appear to move a mode from an exposure mode (not shown) or a like to a standby mode (not shown) to wait for an operation or signal arrival, a power key (not shown), a 10-button keypad (not shown) to input a numeral or a like, a cursor key (not shown) used to move a cursor on a display screen (not shown) of the displaying section 16 in up-down and right-left directions, or a like. The displaying section 16 is made up of a liquid crystal display (not shown) or a like and displays guidance information, message, or a like received from the information management center 4 or a like on its screen. The speech transmitting and receiving section 17 has a microphone and a speaker.

The information management center 4, as shown in Fig. 4, has a behavior information management server 21 (behavior information acquiring means, bonus paying processing means) used to collect position information in real time, to perform specified statistical processing according to accumulated position information or a like and to produce behavior information, a behavior information database server 22 used to store collected position information and corresponding time information for every user, a user information management server 23 used to manage personal information for every user, a point information management server 24 used to manage point information for every user, a merchandise information management server 25 used to manage merchandise information to be supplied to users, a mail server 26 used to once accumulate and manage e-mail transmitted from a portable terminal $2_1$ ($2_2$, $2_3$, ⋯, $2_r$), and a monitoring terminal 27 to be operated by a person in charge at the information collector B.(Fig. 1)

The behavior information management server 21, as shown in Fig. 5, has a controlling section 28 to control each component according to a specified control program, a storing section 29 to store various programs to be executed by the controlling section 28 and various data, and a communicating section 31 to carry out data communications according to a specified protocol. The controlling section 28 is made up CPU or a like and executes various programs stored in the storing section 29, controls each of components making up the behavior information management server 21 and performs member collecting information presenting processing, point addition judging processing, merchandise information presenting processing, merchandise supply judging processing, merchandise distribution requesting processing, behavior information producing processing, or a like.

The storing section 29 is made up of a ROM, RAM, FD (Flexible disk), HD (Hard Disk), FDD (Floppy Disk Drive) and HDD (Hard Disk Drive) into which CD-ROM (Compact Disk- Read Only Memory) is installed, CD-ROM driver, or a like. The storing section 29 stores a member collecting information presenting program, point addition judging program, merchandise information presenting program, merchandise supply judging program, merchandise distribution requesting program, behavior information producing program, or a like.

In the member collecting information presenting program, procedures are written for producing member collecting guidance information and for presenting the member collecting guidance information on a homepage set up on the Internet to be used for sales activity by the information collector B. In the point addition judging program, procedures are written by which a judgement as to whether a specified number of points is to be added, in a specified period, to the number of points being presently kept by a user $A_1$ ($A_2$, $A_3$, ⋯, $A_r$) is made according to frequency of transmission of position information from the portable terminal $2_1$ ($2_2$, $2_3$, ⋯, $2_r$) and, when the addition of the specified number of points is judged to be permissible, a renewal request is made of the point information management server 24. The frequency of transmission of position information is calculated according to position information being accumulated in the behavior information database server 22 and corresponding time information. In the merchandise information presenting program, when a request is made by a portable terminal $2_1$ ($2_2$, $2_3$, ⋯, $2_r$) having accessed a homepage via the network 3, procedures are written for searching for merchandise that can correspond to the number of points being kept by a user $A_1$ ($A_2$, $A_3$, ⋯, $A_r$) and can meet conditions specified by the user $A_1$ ($A_2$, A3, ⋯, $A_r$) by making an access to the merchandise information management server 25, and for providing merchandise information on the homepage.

In the merchandise supply judging program, procedures are written by which a judgement as to whether or not merchandise is supplied is made according to merchandise request information transmitted from a portable terminal $2_1$ ($2_2$, $2_3$, ⋯, $2_r$) and in consideration of the number of points being kept by a user $A_1$ ($A_2$, $A_3$, ⋯, $A_r$), inventory states, or a like. In the merchandise distribution requesting program, procedures are written by which, when merchandise is judged to be supplied, a request is made asking distribution processing of the commercial transaction supporting server 5 according to information about a destination to which merchandise is to be distributed which has been transmitted from a portable terminal $2_1$ ($2_2$, $2_3$, ⋯, $2_r$).

In the behavior information producing program, procedures are written in which specified statistical processing including a summing process is performed according to position information accumulated in the behavior information database server 22, corresponding time information, and personal information of a user $A_1$ ($A_2$, $A_3$, ⋯, $A_r$) being stored in the user information management server 23, and behavior information to be put to work for a marketing research or a like is produced. In the embodiment, in the above statistical processing, data mining processing to derive trends and patterns of behavior of a user $A_1$ ($A_2$, $A_3$, ⋯, $A_r$) is performed according to accumulated position information. Also, when produced behavior information is fed, for sale, to an information receiver, when necessary, behavior information is produced depending on business requirement contents of the information receiver after individual adjustment of the contents.

Each of the behavior information database server 22, user information management server 23, point information management server 24, merchandise information management server 25, and mail server 26 has the same hardware configurations as the behavior information management server 21, which is made up of a controlling section to control each of components according to a specified control program, a storing section to store various programs and data, and a communicating section to carry out data communication according to a specified protocol. The storing section 32 in the behavior information database server 22, as shown in Fig. 6, stores collected position information and corresponding time information for every user $A_1$ ($A_2$, $A_3$, ⋯, $A_r$) to create database. Also, a storing section in the user information management server 23 stores personal information including a name, age, birth date, sex, nationality, residence, occupation, family make-up, hobby, or a like, for every user $A_1$ ($A_2$, $A_3$, ⋯, $A_r$). Moreover, a storing section 33 in the point information management server 24, as shown in Fig. 7, stores the number of points being kept by every user $A_1$ ($A_2$, $A_3$, ⋯, $A_r$) in an ordinarily renewed state.

The monitoring terminal 27 is made up of, for example, a personal computer and, as shown in Fig. 8, has a controlling section 35, a storing section 36, a communicating section 37, an operating section 38, and a displaying section 39. The controlling section 35 is made up of a CPU (Central Processing Unit) or a like and executes various programs being stored in the storing section 36 and controls each component making up a main body of the monitoring terminal 27. The storing section 36 is made up of semiconductor memories such as a ROM, RAM and of FD, HD, FDD and HDD into which CD-ROM is installed, CD-ROM driver, or a like, and stores various programs to be executed by the controlling section 23 and a variety of pieces of information. The operating section 38 is made up of, for example, a keyboard, mouse, or a like and is used to input various instructions and/or necessary information. The displaying section 39 is made up of a CRT (Cathode - Ray Tube) display, liquid crystal display, or a like and is used to display a character and/or image on its screen.

In the network 3, as shown in Fig. 2, there exists a mobile communication network 43 that can be connected to an Internet 42 via a communication management center 41 managed by a mobile communication carrier D. In the embodiment shown in Fig. 2, position information fed from a portable terminal $2_1$ ($2_2$, $2_3$, ⋯, $2_r$) is transmitted via the nearest base station $44_1$ ($44_2$, $44_3$, ⋯, $44_r$) to the communication management center 41 and corresponding member collecting information, merchandise information, or a like fed from the information management center 4 being connected to the Internet 42 are supplied via the communication management center 41 to the portable terminal $2_1$ ($2_2$, $2_3$, ⋯, $2_r$).

The communication management center 41, as shown in Fig. 9, has an information management server 45 used to manage customer information or a like, a connection processing server 46 used to connect the mobile communication network 43 to, for example, the Internet 42, and a mail server 47 used to accumulate and manage e-mail transmitted from a portable terminal $2_1$ ($2_2$, $2_3$, ⋯, $2_r$) or e-mail transmitted to a portable terminal $2_1$ ($2_2$, $2_3$, ⋯, $2_r$).

Each of the information management server 45, connection processing server 46, and mail server 47 has the same configurations as the behavior information management server 21 or a like described above and has a controlling section to control each component according to a specified control program, storing section to store various programs and/or data, and communicating section to carry out data communications according to a specified protocol. The storing section in the information management server 45 stores information about a present position, a subscriber number, accounting information, or a like of each of portable terminals $2_1$, $2_2$, $2_3$, $\cdots$, $2_r$, in an ordinarily renewed state. Moreover, the commercial transaction supporting server 5 is made up of a controlling section to control each component according to a specified control program, a storing section to store various programs and/or data, a communicating section to carry out data communications according to a specified protocol, an operating section, and a displaying section.

Next, operations of the behavior information collecting system 1 having configurations described above are described by referring to Figs. 10 and 11. First, let it be assumed that each of the users $A_1$, $A_2$, $\cdots$, $A_r$ has reached a contract that each of the users $A_1$, $A_2$, $\cdots$, $A_r$, by becoming a member of the information collector B, is entitled to receive favorite merchandise in compensation for supplying position information, depending on the number of accumulated points. A user ID (Identification) is given to each of the users $A_1$, $A_2$, $\cdots$, $A_r$. Moreover, member collecting guidance information is presented on a homepage set up on the Internet for sales activity of the information collector B.

The controlling section 11 in a portable terminal $2_1$ ($2_2$, $2_3$, $\cdots$, $2_r$) transmits position information via the wireless communicating section 13 to the information management center 4 in a predetermined cycle. That is, the controlling section 11, after having produced position information including of a longitude and latitude or a like (Step ST11 (shown in Fig. 10)) according to radio signals received via the GPS receiving section 14, transmits the produced position information via the wireless communicating section 13 to the information management center 4 (Step ST12) as shown in Fig. 11. The position information is sent, for example, in the form of e-mail. In the information management center 4, the behavior information management server 21, after having received the position information via, for example, the mail server 26, transfers the information to the behavior information database server 22 to have it accumulated (Step ST13) .

Processing of producing and transmitting the above position information and processing of receiving and accumulating the above position information are repeated a plurality of times. A portable terminal $2_1$ ($2_2$, $2_3$, $\cdots$, $2_r$) produces position information in Step ST14 and transmits the position information to the information management center 4 in Step ST15. Then, after the information management center 4 has received and the position information has been accumulated in Step ST16, the controlling section 28 in the behavior information management server 21 judges whether or not the number of points should be added to the number of points being kept by a user $A_1$ ($A_2$, $A_3$, $\cdots$, $A_r$) according to frequency of transmission of position information to be fed from a portable terminal $2_1$ ($2_2$, $2_3$, $\cdots$, $2_r$) in Step

ST17. The controlling section 28, when judging that the number of points should be added, determines the specified number of points to be added (Step ST18) , makes a request asking renewal of the points of the point information management server 24 and, when the controlling section 28 judges that the number of points should not be added, has the routine proceed to Step ST20, for example.

When a user $A_1$ ($A_2$, $A_3$, $\cdots$, $A_r$) wants merchandise to be supplied, a request is made for presentation of merchandise information from a portable terminal $2_1$ ($2_2$, $2_3$, $\cdots$, $2_r$) (Step ST19) . The controlling section 28, when having received a request for presentation of merchandise information from a portable terminal $2_1$ ($2_2$, $2_3$, $\cdots$, $2_r$) having accessed a homepage via the network 3, makes a search for merchandise that can correspond to the number of points being kept by a user $A_1$ ($A_2$, $A_3$, $\cdots$, $A_r$) and can meet conditions specified by the user $A_1$ ($A_2$, $A_3$, $\cdots$, $A_r$) by making an access to the merchandise information management server 25 and presents merchandise information on a homepage (Step ST20).

When a user $A_1$ ($A_2$, $A_3$, $\cdots$, $A_r$) browses the homepage for merchandise information and selects desired merchandise, merchandise selecting information is transmitted from a portable terminal $2_1$ ($2_2$, $2_3$, $\cdots$, $2_r$) to the information management center 4 (Step ST21). In the information management center 4, the controlling section 28 in the behavior information management server 21 judges, based on merchandise request information transmitted from a portable terminal $2_1$ ($2_2$, $2_3$, $\cdots$, $2_r$) and in consideration of the number of points being kept by the user $A_1$ ($A_2$, $A_3$, $\cdots$, $A_r$), inventory states, or a like, whether the requested merchandise should be provided or not (Step ST22).

The controlling section 28, when judging that the requested merchandise is not to be provided, informs the user $A_1$ ($A_2$, $A_3$, $\cdots$, $A_r$) of the number of points being presently kept by the user $A_1$ ($A_2$, $A_3$, $\cdots$, $A_r$) (Step ST23) and, when judging that the requested merchandise is to be provided, makes a request asking distribution processing of the commercial transaction supporting server 5 (Step ST24), according to information about an object to which merchandise is to be distributed which was fed from the portable terminal $2_1$ ($2_2$, $2_3$, $\cdots$, $2_r$). The commercial transaction supporting server 5, when having received the request for distribution processing (Step ST25), performs merchandise distribution processing (Step ST26). This causes specified merchandise to be delivered to the specified object 48 to which merchandise is to be distributed, for example, to a home of the user $A_1$ ($A_2$, $A_3$, $\cdots$, $A_r$).

When a user $A_1$ ($A_2$, $A_3$, $\cdots$, $A_r$) receives merchandise, merchandise receipt notification is transmitted from a portable terminal $2_1$ ($2_2$, $2_3$, $\cdots$, $2_r$) according to manipulation of the user $A_1$ ($A_2$, $A_3$, $\cdots$, $A_r$) to the information management center 4 (Step ST27). In the information management center 4, the controlling section 28 in the behavior information management server 21 performs reduction processing (Step ST28) and makes a request asking renewal processing of the point information management server 24.

The controlling section 28 in the behavior information management server 21 performs specified statistical processing including summing processing, according to position information accumulated in the behavior information database server 22 and corresponding time information and on personal information of a user $A_1$ ($A_2$, $A_3$, ···, $A_r$) stored in the user information management server 23 and, whenever necessary, performs diagrammatizing processing to produce behavior information to be put to work for a marketing research or a like (Step ST29). Here, in the above statistical processing, data mining processing to derive trends and patterns of behavior of a user $A_1$ ($A_2$, $A_3$, ···, $A_r$) is performed according to the accumulated position information. When information is supplied, at cost, to a specified information receiver, if necessary, behavior information is produced depending on business requirement contents of the information receiver after individual adjustment of the contents.

Thus, by configuring the system as above, a user $A_1$ ($A_2$, $A_3$, ···, $A_r$) can obtain merchandise, as a bonus in exchange for feeding of position information, depending on the number of points being kept by the user $A_1$ ($A_2$, $A_3$, ···, $A_r$), that is, depending on frequency of transmitting position information. As a result, the information collector B can expect to easily collect position information widely from many users $A_1$, $A_2$, $A_3$, ···, $A_r$ and, therefore, database is constructed by surely acquiring exact and detailed behavior information at low costs and in a short time, which enables a highly accurate marketing research to be made at low costs and in a short time. Also, the information collector B can get a counter value by feeding behavior information in the form of a database to a specified information receiver. Moreover, the information receiver having received the behavior information can effectively map out managerial strategy including a concrete method for collecting customers and for advertisement by making the most of the behavior information.

## Second Embodiment

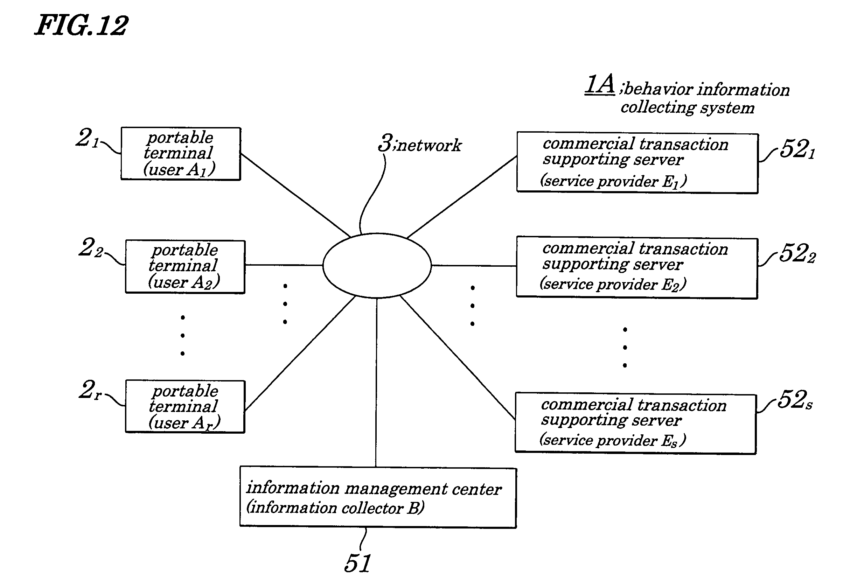

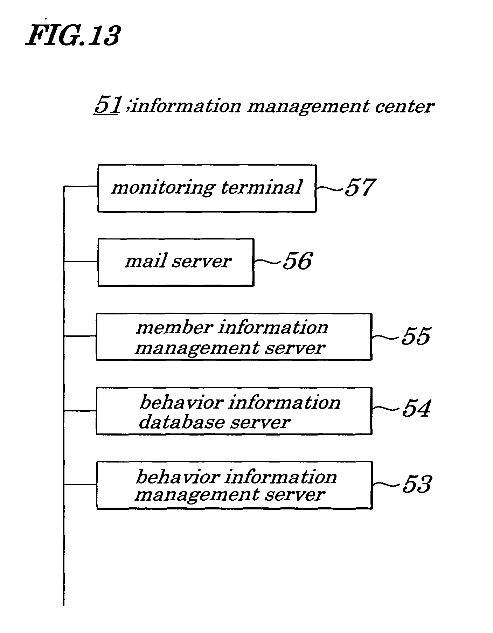

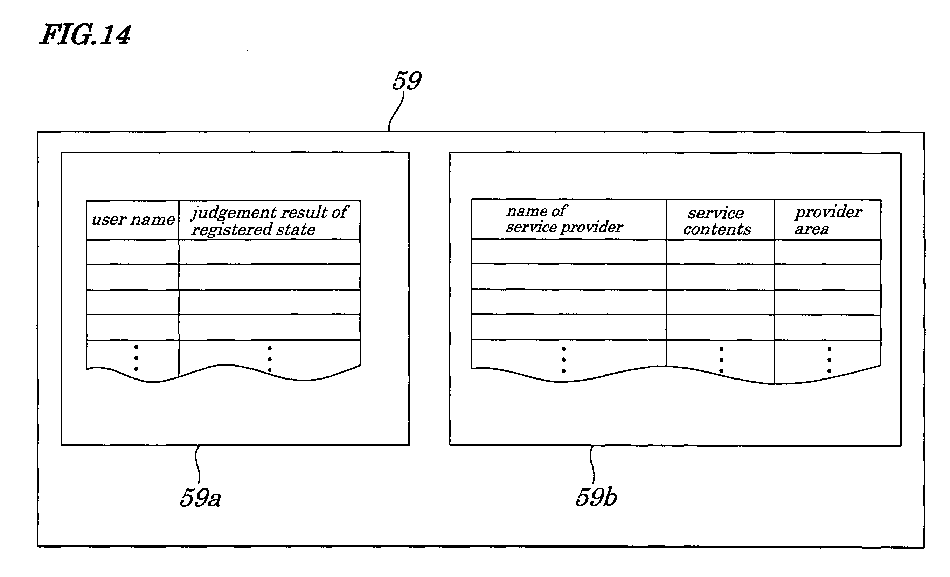

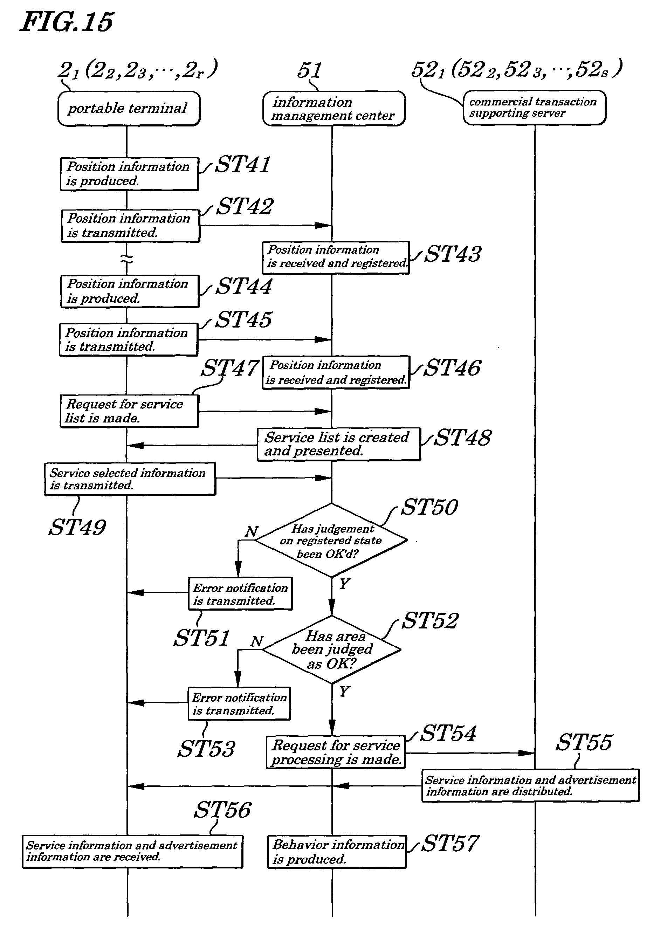

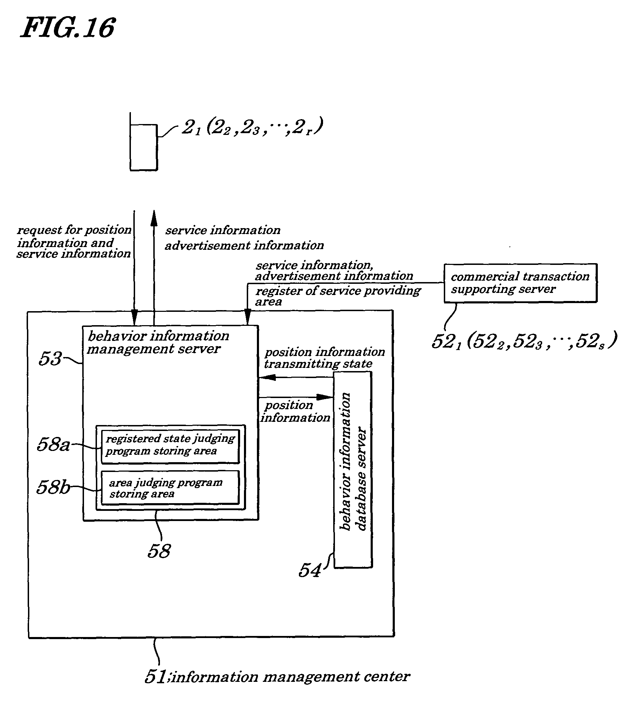

Figure 12 is a schematic block diagram showing configurations of a behavior information collecting system 1A according to a second embodiment of the present invention. Figure 13 is a schematic block diagram showing an information management center 51 in the behavior information collecting system 1A of the second embodiment. Figure 14 is a diagram explaining contents stored in a storing section in a behavior information management server 53 in the information management center 51 of the second embodiment. Figure 15 is a processing procedure diagram explaining operations of the behavior information collecting system 1A of the second embodiment. Figure 16 is a diagram explaining operations of the behavior information collecting system 1A of the second embodiment.

The configurations of the behavior information collecting system 1A of the second embodiment differ greatly from those in the first embodiment in that service is supplied via an information collector B from a service provider to a user being a position information supplier, in that advertisement information for the service provider is distributed to the position information supplier, in that a range for supplying service is limited, and in that the point system is not employed. Configurations other than those are approximately the same as those in the first embodiment and their descriptions are simplified accordingly.

The behavior information collecting system 1A of the second embodiment, as shown in Fig. 12, includes portable terminals (mobile terminals) $2_1$, $2_2$, ···, $2_r$ such as portable cellular phones or a like being used by many users $A_1$, $A_2$, ···, $A_r$, an information management center (information processing unit) 51 being connected via a network 3 to the portable terminals $2_1$, $2_2$, ···, $2_r$ and being managed by the information collector B, and commercial transaction supporting servers $52_1$, $52_2$, ···, $52_s$ being connected via the network 3 to the information management center 51 and being used by service providers $E_1$, $E_2$, ···, $E_s$ ("s" is an arbitrary number being 2 or more).

The information management center 51, as shown in Fig. 13, has a behavior information management server 53, a behavior information database server 54, a member information management server 55 to manage information about a user $A_1$ ($A_2$, $A_3$, ···, $A_r$) being a member of the information collector B and information about a service provider $E_1$ ($E_2$, $E_3$, ···, $E_s$), a mail server 56, and a monitoring terminal 57. Each of the behavior information management server 53, behavior information database server 54, member information management server 55, and mail server 56 has the same hardware configurations as the behavior information management server 21 and includes a controlling section to control each component according to a specified control program, a storing section to store various programs and/or data, and a communicating section to carry out data communications according to a specified protocol.

In a program storing area in the storing section of the behavior information management server 53, a member collecting information presenting program, a service list presenting program, a registered state judging program, an area judging program, a behavior information producing program, or a like are stored. In the service list presenting program, procedures are written by which, when a request is made from a portable terminal $2_1$ ($2_2$, $2_3$, ···, $2_r$) having made an access to a homepage via the network 3, the controlling section in the behavior information management server 53 presents, on the homepage, contents of service that can be supplied to a user $A_1$ ($A_2$, $A_3$, ···, $A_r$) by the service

provider $E_1$ (($E_2$, $E_3$, ⋯, $E_s$) in an area containing a position of the portable terminal $2_1$ ($2_2$, $2_3$, ⋯, $2_r$).

In the registered state judging program, procedures are written by which a judgement is made as to whether or not a user $A_1$ ($A_2$, $A_3$, ⋯, $A_r$) can use the presented service, based on frequency of transmission of position information fed from a portable terminal $2_1$ ($2_2$, $2_3$, ⋯, $2_r$). That is, when information receiving frequency "S" given by a following equation (1) is minimum permissible frequency $S_0$ or more (S $\geqq$ $S_0$), a user $A_1$ ($A_2$, $A_3$, ⋯, $A_r$) is registered as a user who is able to receive specified service:

$$S = N / T \qquad \text{Equation (1)}$$

where "T" denotes specified time and "N" denotes the number of times of receiving position information.

In the area judging program, procedures are written by which, when service whose receiving area is limited is selected, a judgement is made as to whether a position of a portable terminal $2_1$ ($2_2$, $2_3$, ⋯, $2_r$) is within the above limited area.

Also, in the program storing area 58 (shown Fig. 16) of the storing section in the behavior information management server 53, there are a registered state judging program storing area 58a (Fig. 16) in which the registered state judging program is stored and an area judging program storing area 58b (Fig. 16) in which the area judging program is stored (see Fig. 16). Moreover, in an information storing area 59 (Fig. 14) of the storing section in the behavior information management server 53, as shown in Fig. 14, there are a registered state information storing area 59a in which registered state information indicating whether service can be used is stored for every user $A_1$ ($A_2$, $A_3$, ⋯, $A_r$) and an area information storing area 59b that stores contents of service to be supplied by each service provider $E_1$ ($E_2$, $E_3$, ⋯, $E_s$) and areas where service can be supplied.

Next, operations of the behavior information collecting system 1A having configurations described above are described by referring to Figs. 15 and 16. First, let it be assumed that each of the users $A_1$, $A_2$, ⋯, $A_r$ has reached a contract that each of the users $A_1$, $A_2$, ⋯, $A_r$, by becoming a member of the information collector B, is entitled to receive favorite merchandise in compensation for supplying information, depending on the number of accumulated points. Also, let it be assumed that each of the service providers $E_1$, $E_2$, ⋯, $E_s$ has reached a contract that each of the service providers $E_1$, $E_2$, ⋯, $E_s$, by becoming a member of the information collector B and by paying a specified handling charge to the information collector B, is entitled to distribute advertisement information to a portable terminals $2_1$, $2_2$, ⋯, $2_r$ existing, for example, in a specified area, together with service information requested by users $A_1$, $A_2$, ⋯, $A_r$. Moreover, in the embodiment, the service information to be supplied by the service providers $E_1$, $E_2$, ⋯,

$E_s$ includes not only, for example, music information, video information, character information, all being handled as literary work, but also information about discounting service to be provided at a facility and/or store (such as coupon information or a like).

In the portable terminal $2_1$ ($2_2$, $2_3$, ⋯, $2_r$), as shown in Fig. 16, a controlling section 11 transmits position information via a wireless communicating section 13 to the information management center 51 in a predetermined period. That is, the controlling section 11, after having produced position information according to radio signals received via the GPS signal receiving section 14 (Step ST41), transmits the position information including of information about a longitude, latitude, or a like, via the wireless communicating section 13, to the information management center 51 (Step ST42). The position information is transmitted, for example, in the form of e-mail. In the information management center 51, the behavior information management server 53, after having received the position information, for example, via the mail server 56, transfers the position information to the behavior information database server 54 to have it accumulated (Step ST43).

Processing of producing and transmitting the above position information and processing of receiving and accumulating the above position information are repeated a plurality of times. A portable terminal $2_1$ ($2_2$, $2_3$, ⋯, $2_r$) produces position information in Step ST44 and transmits the position information to the information management center 4 in Step ST45. The information management center 51 receives and accumulates the position information in Step ST46. When a user $A_1$ ($A_2$, $A_3$, ⋯, $A_r$) wants to obtain information about receivable service contents, a request for providing a service list is made from the portable terminal $2_1$ ($2_2$, $2_3$, ⋯, $2_r$) (Step ST47). At this time point, the position information is also transmitted. If the user $A_1$ ($A_2$, $A_3$, ⋯, $A_r$) has already determined desired service, the routine proceeds to Step ST49.

A controlling section in the behavior information management server 53, when receiving a request for a service list from a portable terminal $2_1$ ($2_2$, $2_3$, ⋯, $2_r$) having made an access to a homepage via the network 3, presents, on the homepage, contents of service that can be supplied to a user $A_1$ ($A_2$, $A_3$, ⋯, $A_r$) by the service provider $E_1$ ($E_2$, $E_3$, ⋯, $E_s$) in an area containing a position of the portable terminal $2_1$ ($2_2$, $2_3$, ⋯, $2_r$). When the user $A_1$ ($A_2$, $A_3$, ⋯, $A_r$) browses the homepage for the service list and selects desired service, service selected information, together with position information, is transmitted from the portable terminal $2_1$ ($2_2$, $2_3$, ⋯, $2_r$) to the information management center 51 (Step ST49).

In the information management center 51, the controlling section in the behavior information management server 53 judges, based on the service selected information fed from the portable terminal $2_1$ ($2_2$, $2_3$, ⋯, $2_r$) and on frequency of transmission of position information fed from the portable terminal $2_1$ ($2_2$, $2_3$, $\cdots$, $2_r$), whether the user $A_1$ ($A_2$, $A_3$, $\cdots$, $A_r$) can use the service (Step ST50).

The controlling section in the behavior information management server 53, when judging the use of service as impossible, transmits error notification to the portable terminal $2_1$ ($2_2$, $2_3$, $\cdots$, $2_r$) (Step ST51) and, when judging the use of service as possible, has the routine to proceed to Step ST52. That is, when information receiving frequency S is minimum permissible frequency $S_0$ or more ($S \geqq S_0$), the user $A_1$ ($A_2$, $A_3$, $\cdots$, $A_r$) is registered as a user who is able to receive specified service.

In the step ST52, the controlling section in the behavior information management server 53, when service whose receiving area is limited is selected, judges whether a position of a portable terminal $2_1$ ($2_2$, $2_3$, $\cdots$, $2_r$) is within the above limited area (Step ST52). The controlling section in the behavior information management server 53, when judging that the position of a portable terminal $2_1$ ($2_2$, $2_3$, $\cdots$, $2_r$) is not within the limited area, transmits error notification to the portable terminal $2_1$ ($2_2$, $2_3$, $\cdots$, $2_r$) (Step ST53) and, when judging that the position of a portable terminal $2_1$ ($2_2$, $2_3$, $\cdots$, $2_r$) is within the limited area, makes a request asking specified service processing of the commercial transaction supporting server $52_1$ ($52_2$, $52_3$, $\cdots$, $52_s$) (Step ST54).

The commercial transaction supporting server $52_1$ ($52_2$, $52_3$, $\cdots$, $52_s$), when receiving a request for service processing, distributes specified service information, together with advertisement information, via the information management center 51 or directly, to a portable terminal $2_1$ ($2_2$, $2_3$, $\cdots$, $2_r$) (Step ST55). This causes a portable terminal $2_1$ ($2_2$, $2_3$, $\cdots$, $2_r$) to receive specified service information desired by a user $A_1$ ($A_2$, $A_3$, $\cdots$, $A_r$), together with advertisement information (Step ST56).

In the information management center 51, a controlling section in the behavior information management server 53 performs specified statistical processing including a summing process according to position information accumulated in the behavior information database server 54, corresponding time information, and personal information of a user $A_1$ ($A_2$, $A_3$, $\cdots$, $A_r$) being stored in the user information management server 55, and produces behavior information to be put to use for marketing research or a like (Step ST57).

In the embodiment, in the above statistical processing, data mining processing to derive trends and patterns of behavior of a user $A_1$ ($A_2$, $A_3$, $\cdots$, $A_r$) is performed according to accumulated position information. Also, when produced behavior information is fed, for sale, to an information receiver (including service providers $E_1$, $E_2$, $\cdots$, $E_s$), when necessary, behavior information is produced depending on business requirement contents of the information receiver after individual adjustment of the contents.

According to the configurations of the second embodiment, approximately the same effect as obtained in the first embodiment can be achieved. In addition, users $A_1$, $A_2$, $\cdots$, $A_r$ can receive not only service supplied by an information collector B but also service supplied by service providers $E_1$, $E_2$, $\cdots$, $E_s$ and service whose receiving area is limited. Also, the information collector B can acquire a handling charge from the service providers $E_1$, $E_2$, $\cdots$, $E_s$ by distributing advertisement information for the service providers $E_1$, $E_2$, $\cdots$, $E_s$. The service providers $E_1$, $E_2$, $\cdots$, $E_s$ can transmit advertisement information in addition to service information to the users $A_1$, $A_2$, $\cdots$, $A_r$ and, therefore, can use it for sales promotion of their merchandise or service. Moreover, the service provider $E_1$ ($E_2$, $E_3$, $\cdots$, $E_s$), by distributing advertisement information to portable terminals $2_1$, $2_2$, $\cdots$, $2_r$) in a specified area, can effectively provide advertisement information requiring immediacy at low costs. This enables an increase in power for collection of customers. Moreover, by doing the above, an increase not only in power for customer collection of a single service provider $E_1$ ($E_2$, $E_3$, $\cdots$, $E_s$) but also in power for customer collection in a specified area can be expected.

It is apparent that the present invention is not limited to the above embodiments but may be changed and modified without departing from the scope and spirit of the invention. For example, in the above embodiments, cases are described in which produced behavior information is supplied for sale to specified information receivers, however, the behavior information may be used by an information provider itself. In the above embodiment, cases are described in which statistical processing is performed to produce behavior information, however, obtained position information may be supplied, as it is, directly to a specified information receiver without statistical processing.

The commercial transaction supporting server 5 ($52_1$, $52_2$, $\cdots$, $52_s$) may be connected to the information management center 4 (51) via an exclusive communication path not belonging to the network 3. When position information is to be transmitted from a portable terminal, for example, an SMS (Short Message Service) method, instead of an e-mail method, may be used. When a request for transmission of position information is received from the information management center 4 (51), position information may be transmitted from a portable terminal. In the above embodiments, cases are described in which, for example, merchandise information is presented on a homepage, however, such the information may be transmitted to a portable terminal $2_1$ ($2_2$, $2_3$, $\cdots$, $2_r$) by using e-mail.

In the first embodiment, cases are explained in which specified merchandise is supplied within a range of the number of accumulated points of the user $A_1$ ($A_2$, $A_3$, $\cdots$, $A_r$), however, specified service may be supplied or, for example, accounting service for communication fees may be provided. In the first embodiment, receivers (distinations) of merchandise are users themselves, however, persons other than users may be a receiver. If a user being entitled to receive merchandise designates a person other than a user as a receiver of the merchandise, the user may use points having been increased by the designation, as a bonus, next time and thereafter and, in this case, as the number of receivers increases, the number of points may be increased proportionally.

Also, if a user calls on an other user to provide position information, a service point may be increased as a bonus as well. When a sum total of service points having been given to a user reaches a specified number of points, merchandise or contents of service that can be supplied may be informed. Also, information about a consuming action of a person accompanying a user may be also transmitted, for example, in a manner in which a survey on the consuming action is conducted by questionnaires, together with position information.

Moreover, in the second embodiment, when the commercial transaction supporting server $52_1$ ($52_2$, $52_3$, ···, $52_s$) receives a request for service processing, specified service information is distributed, together with advertisement information, via the information management center 51 or directly, to a portable terminal $2_1$ ($2_2$, $2_3$, ···, $2_r$). However, service information and advertisement information transmitted in advance from the commercial transaction supporting server $52_1$ ($52_2$, $52_3$, ···, $52_s$) may be accumulated, for example, in the behavior information management server in the information management center 51 and, then, in response to demands from the portable terminal $2_1$ ($2_2$, $2_3$, ···, $2_r$), may be distributed to the portable terminal $2_1$ ($2_2$, $2_3$, ···, $2_r$). Furthermore, in the second embodiment, the point system may be employed.

**Claims**

1.    A consumer behavior information collecting system (1; 1A) **characterized by** comprising:

two or more mobile terminals ($2_1$, $2_2$, ···, $2_r$) to be used by two or more consumers ($A_1$, $A_2$, ···, $A_r$); and
an information processing device (4) to be used by a behavior information collector who collects behavior information of said two or more consumers ($A_1$, $A_2$, ···, $A_r$);

wherein said two or more mobile terminals ($2_1$, $2_2$, ···, $2_r$) are connected via a network (3) to said information processing device (4);
wherein each of said two or more mobile terminals ($2_1$, $2_2$, ···, $2_r$) comprises:

a GPS (Global Positioning System) signal receiving means (14) to receive radio signals from GPS satellites;
a position information acquiring means (11) to acquire position information of each of said two or more mobile terminals ($2_1$, $2_2$, ···, $2_r$) according to said radio signals; and
a position information transmitting means (13) to transmit said position information via said network (3) to said information processing device (4); and

wherein said information processing device (4) comprises:

a behavior information acquiring means (21) to acquire said position information transmitted via said network (3) from each of said two or more mobile terminals ($2_1$, $2_2$, ···, $2_r$) and to obtain behavior information of each of said two or more consumers ($A_1$, $A_2$, ···, $A_r$); and
a bonus paying processing means (21) to pay a bonus to each of said two or more consumers ($A_1$, $A_2$, ···, $A_r$) in exchange for supply of said position information.

2.    The consumer behavior information collecting system (1; 1A) according to Claim 1, wherein said behavior information obtained by said behavior information acquiring means (21) is supplied to an information receiver in exchange for a specified counter value.

3.    The consumer behavior information collecting system (1; 1A) according to Claim 1, wherein said bonus paying processing means (21) presents contents of said bonus depending on a degree of contribution of said position information transmitted from each of said two or more mobile terminals ($2_1$, $2_2$, ···, $2_r$) for collection of said behavior information.

4.    The consumer behavior information collecting system (1; 1A) according to Claim 3, wherein said bonus paying processing means (21) issues, as said bonus, service points that can be appropriated for a part or whole of a counter value of specified merchandise or service, in accordance with the degree of said contribution.

5.    The consumer behavior information collecting system (1; 1A) according to Claim 3, wherein said bonus paying processing means (21) determines contents of said bonus to be presented depending on frequency of receiving said position information fed from each of said two or more mobile terminals ($2_1$, $2_2$, ···, $2_r$).

6.    The consumer behavior information collecting system (1; 1A) according to Claim 1, wherein said behavior information acquiring means (21) produces said behavior information of each of said two or more consumers ($A_1$, $A_2$, ···, $A_r$), according to said position information, corresponding time information, and personal information of corresponding consumer ($A_1$, $A_2$, ···, $A_r$).

7. The consumer behavior information collecting system (1; 1A) according to Claim 1, wherein each of said two or more mobile terminals ($2_1$, $2_2$, ···, $2_r$) transmits, together with said position information, additional information about at least consuming actions of each of said two or more consumers ($A_1$, $A_2$, ···, $A_r$) to said behavior information acquiring means (21).

8. The consumer behavior information collecting system (1; 1A) according to Claim 1, wherein said behavior information acquiring means (21) performs specified statistical processing including a summing process according to the accumulated position information of a great number of said consumers ($A_1$, $A_2$, ···, $A_r$) to produce said behavior information of said two or more consumers ($A_1$, $A_2$, ···, $A_r$).

9. The consumer behavior information collecting system (1; 1A) according to Claim 1, wherein said bonus paying processing means, (21) when each of said two or more mobile terminals ($2_1$, $2_2$, ···, $2_r$) is located within a specified area, supplies service information, as said bonus, to each of said two or more mobile terminals ($2_1$, $2_2$, ···, $2_r$).

10. The consumer behavior information collecting system (1; 1A) according to Claim 9, wherein said bonus paying processing means (21) supplies said service information fed from a service information supplier and advertisement information of said service information supplier to each of said two or more mobile terminals ($2_1$, $2_2$, ···, $2_r$) in exchange for a specified counter value.

11. A consumer behavior information collecting method **characterized by** comprising:

    a process of connecting two or more mobile terminals ($2_1$, $2_2$, ···, $2_r$) to be used by two or more consumers ($A_1$, $A_2$, ···, $A_r$), via a network, (3) to an information processing device (4) to be used by a behavior information collector who collects behavior information of said two or more consumers ($A_1$, $A_2$, ···, $A_r$);

    wherein each of said two or more mobile terminals ($2_1$, $2_2$, ···, $2_r$) performs GPS signal receiving processing to receive radio signals fed from GPS satellites, position information acquiring processing to acquire position information of each of said two or more mobile terminals ($2_1$, $2_2$, ···, $2_r$) according to said radio signals, and position information transmitting processing to transmit said position information via said network (3) to said information processing device (4); and

    wherein said information processing device (4) performs behavior information acquiring processing to acquire said position information transmitted via said network (3) from each of said two or more mobile terminals ($2_1$, $2_2$, ···, $2_r$) and to obtain behavior information of said two or more consumers ($A_1$, $A_2$, ···, $A_r$) and bonus paying processing to pay a bonus to said two or more consumers ($A_1$, $A_2$, ···, $A_r$) in exchange for supply of said position information.

12. The consumer behavior information collecting method according to Claim 11, wherein said behavior information acquired by said behavior information acquiring processing is supplied to an information supplier in exchange for a specified counter value.

13. The consumer behavior information collecting method according to Claim 11, wherein said information processing device (4), by said bonus paying processing, presents contents of said bonus in accordance with a degree of contribution of said position information transmitted from each of said two or more mobile terminals ($2_1$, $2_2$, ···, $2_r$) for collection of said behavior information.

14. The consumer behavior information collecting method according to Claim 13, wherein said information processing device (4), by said bonus paying processing, issues, as said bonus, service points that can be appropriated for a part or whole of a counter value of specified merchandise or service, in accordance with the degree of said contribution.

15. The consumer behavior information collecting method according to Claim 13, wherein said information processing device (4), by said bonus paying processing, determines contents of said bonus to be presented depending on frequency of receiving said position information to be fed from each of said two or more mobile terminals ($2_1$, $2_2$, ···, $2_r$).

16. The consumer behavior information collecting method according to Claim 11, wherein said information processing device (4), by said behavior information acquiring processing, produces said behavior information of each of said two or more consumers ($A_1$, $A_2$, ···, $A_r$), according to said position information, corresponding time information, and personal information of corresponding consumer ($A_1$, $A_2$, ···, $A_r$).

17. The consumer behavior information collecting method according to Claim 11, wherein each of said two or more mobile terminals ($2_1$, $2_2$, ···, $2_r$), by said

position information transmitting processing, transmits, together with said position information, additional information about at least consuming actions of each of said consumers ($A_1$, $A_2$, $\cdots$, $A_r$) to said information processing device (4).

18. The consumer behavior information collecting method according to Claim 11, wherein said information processing device (4), by said behavior information acquiring processing, performs specified statistical processing including a summing process according to the accumulated position information of a great number of said consumers ($A_1$, $A_2$, $\cdots$, $A_r$) to produce said behavior information of said two or more consumers ($A_1$, $A_2$, $\cdots$, $A_r$).

19. The consumer behavior information collecting method according to Claim 11, wherein said information processing device (4), by said bonus paying processing, when each of said two or more mobile terminals ($2_1$, $2_2$, $\cdots$, $2_r$) is located within a specified area, supplies service information, as said bonus, to each of said two or more mobile terminals ($2_1$, $2_2$, $\cdots$, $2_r$).

20. The consumer behavior information collecting method according to Claim 19, wherein said information processing device (4), by said bonus paying processing, supplies said service information fed from a service information supplier and advertisement information of said service information supplier to each of said two or more mobile terminals ($2_1$, $2_2$, $\cdots$, $2_r$) in exchange for a specified counter value.

21. A consumer behavior information collecting program to have a computer execute a consumer behavior information collecting method, the method **characterized by** comprising:

a process of connecting two or more mobile terminals ($2_1$, $2_2$, $\cdots$, $2_r$) to be used by two or more consumers ($A_1$, $A_2$, $\cdots$, $A_r$), via a network (3), to an information processing device (4) to be used by a behavior information collector who collects behavior information of said two or more consumers ($A_1$, $A_2$, $\cdots$, $A_r$);

wherein each of said two or more mobile terminals ($2_1$, $2_2$, $\cdots$, $2_r$) performs GPS signal receiving processing to receive radio signals fed from GPS satellites, position information acquiring processing to acquire position information of each of said two or more mobile terminals ($2_1$, $2_2$, $\cdots$, $2_r$) according to said radio signals, and position information transmitting processing to transmit said position information via said network (3) to said information processing device (4); and

wherein said information processing device (4) performs behavior information acquiring processing to acquire said position information transmitted via said network (3) from each of said two or more mobile terminals ($2_1$, $2_2$, $\cdots$, $2_r$) and to obtain behavior information of said two or more consumers ($A_1$, $A_2$, $\cdots$, $A_r$) and bonus paying processing to pay a bonus to said two or more consumers ($A_1$, $A_2$, $\cdots$, $A_r$) in exchange for supply of said position information.

22. The consumer behavior information collecting program according to Claim 21, wherein said behavior information acquired by said behavior information acquiring processing is supplied to an information supplier in exchange for a specified counter value.

23. The consumer behavior information collecting program according to Claim 21, wherein said information processing device (4), by said bonus paying processing, presents contents of said bonus in accordance with a degree of contribution of said position information transmitted from each of said two or more mobile terminals ($2_1$, $2_2$, $\cdots$, $2_r$) for collection of said behavior information.

24. The consumer behavior information collecting program according to Claim 23, wherein said information processing device (4), by said bonus paying processing, issues, as said bonus, service points that can be appropriated for a part or whole of a counter value of specified merchandise or service, in accordance with the degree of said contribution.

25. The consumer behavior information collecting program according to Claim 23, wherein said information processing device (4), by said bonus paying processing, determines contents of said bonus to be presented depending on frequency of receiving said position information to be fed from each of said two or more mobile terminals ($2_1$, $2_2$, $\cdots$, $2_r$).

26. The consumer behavior information collecting program according to Claim 21, wherein said information processing device (4), by said behavior information acquiring processing, produces said behavior information of each of said two or more consumers ($A_1$, $A_2$, $\cdots$, $A_r$), according to said position information, corresponding time information, and personal information of corresponding consumer ($A_1$, $A_2$, $\cdots$, $A_r$).

# FIG.1

*1;behavior information collecting system*

*3;network*

*2₁* portable terminal (user A₁)

*2₂* portable terminal (user A₂)

*2ᵣ* portable terminal (user Aᵣ)

*commercial transaction supporting server (merchandise dealer C)* *5*

*information management center (information collector B)* *4*

EP 1 508 868 A2

**FIG.2**

*1;behavior information collecting system*

# FIG.3

$\underline{2}_1 (\underline{2}_2, \underline{2}_3, \cdots, \underline{2}_r)$ ;portable terminal

```
13a      13        14a       14              15

      wireless          GPS signal        operating
      communicating     receiving section  section
      section

                     controlling section

                              11

      storing          displaying        speech transmitting
      section          section           and receiving section

      12               16                17
```

EP 1 508 868 A2

# FIG.4

*4 ;information management center*

| |
|---|
| monitoring terminal ~27 |
| mail server ~26 |
| merchandise information management server ~25 |
| point information management server ~24 |
| user information management server ~23 |
| behavior information database server ~22 |
| behavior information management server ~21 |

## FIG.5

*21;behavior information management server*

| communicating section | controlling section | storing section |
|---|---|---|

*31*  *28*  *29*

## FIG.6

*32*

| user A₁ | |
|---|---|
| time | position information |
| | |
| | |
| | |
| ⋮ | ⋮ |

| user A₂ | |
|---|---|
| time | position information |
| | |
| | |
| | |
| ⋮ | ⋮ |

. . .

## FIG.7

| user ID | number of points being kept by users |
|---------|---------------------------------------|
|         |                                       |
|         |                                       |
|         |                                       |
|         | .                                     |
|         |                                       |
| ⋮       | ⋮                                     |

*33*

## FIG.8

*27;monitoring terminal*

*37*

communicating section

*38*

operating section

controlling section ~*35*

storing section

*36*

displaying section

*39*

## FIG.9

*41*;communication management center

```
┌─────────────────────┐
│     mail server     │─── 47
└─────────────────────┘

┌─────────────────────┐
│     connection      │
│  processing server  │─── 46
└─────────────────────┘

┌─────────────────────┐
│     information     │
│  management server  │─── 45
└─────────────────────┘
```

EP 1 508 868 A2

## FIG.10

2₁ (2₂ ,2₃ , ⋯ , 2ᵣ)   4   5

portable terminal | information management center | commercial transaction supporting server

ST11 — Position information is produced.

ST12 — Position information is transmitted.

ST13 — Position information is received and stored.

ST14 — Position information is produced.

ST15 — Position information is transmitted.

ST16 — Position information is received and stored.

ST17 — Is condition for adding number of points satisfied ?  N

Y

ST18 — Number of points is added.

ST19 — Merchandise information is requested.

ST20 — Merchandise information is presented.

ST21 — Merchandise selected information is transmitted.

ST22 — Is condition for merchandise acquirement satisfied ?  N

Y

ST23 — Information about number of points is transmitted.

ST24 — Request for distribution of merchandise is made.

ST25

Request for merchandise distribution is received.

ST27 — Notification of merchandise receipt is made.

Processing of delivering merchandise is performed.

ST26

ST28 — Processing of reducing number of points is performed.

ST29 — Behavior information is produced.

22

## FIG.11

$2_1$ $(2_2, 2_3, \cdots, 2_r)$ ;portable terminal

48;destimation

request for position
information and
merchandise information

point information
merchandise information

delivery of
merchandise

request for delivery
of merchandise

commercial transaction
supporting server

21

behavior information
management server

state of
transmitting
position
information

point
information

5

addition
of points

position
information

merchandise
information

point information management server

merchandise information management server

behavior information database server

24

25

22

4 ;information management center

# FIG.12

*1A ;behavior information collecting system*

$2_1$ — portable terminal (user $A_1$)

$2_2$ — portable terminal (user $A_2$)

$2_r$ — portable terminal (user $A_r$)

*3;network*

commercial transaction supporting server (service provider $E_1$) — $52_1$

commercial transaction supporting server (service provider $E_2$) — $52_2$

commercial transaction supporting server (service provider $E_s$) — $52_s$

information management center (information collector B)

51

EP 1 508 868 A2

*FIG.13*

*51 ;information management center*

```
┌─────────────────────────┐
│   monitoring terminal    │──57
└─────────────────────────┘

┌─────────────────────────┐
│      mail server         │──56
└─────────────────────────┘

┌─────────────────────────┐
│   member information     │──55
│   management server      │
└─────────────────────────┘

┌─────────────────────────┐
│  behavior information    │──54
│  database server         │
└─────────────────────────┘

┌─────────────────────────┐
│  behavior information    │──53
│  management server       │
└─────────────────────────┘
```

FIG.14

59

| user name | judgement result of registered state |
|-----------|--------------------------------------|
|           |                                      |
|           |                                      |
|           |                                      |
|           |                                      |
| ⋮         | ⋮                                    |

59a

| name of service provider | service contents | provider area |
|--------------------------|------------------|---------------|
|                          |                  |               |
|                          |                  |               |
|                          |                  |               |
|                          |                  |               |
| ⋮                        | ⋮                | ⋮             |

59b

## FIG.15

2₁ (2₂,2₃,⋯,2ᵣ )        51        52₁ (52₂,52₃,⋯,52ₛ )

| portable terminal | information management center | commercial transaction supporting server |

Position information is produced. /ST41

Position information is transmitted. /ST42

Position information is received and registered. /ST43

Position information is produced. /ST44

Position information is transmitted. /ST45

ST47    Position information is received and registered. /ST46

Request for service list is made.

Service list is created and presented. /ST48

Service selected information is transmitted.

ST49

ST50
Has judgement on registered state been OK'd?
N

Error notification is transmitted.

ST51    N
ST52
Has area been judged as OK?
Y

Error notification is transmitted.

ST53    Request for service processing is made. /ST54        ST55

Service information and advertisement information are distributed.

ST56

Service information and advertisement information are received.

Behavior information is produced. /ST57

## FIG.16

$2_1 (2_2, 2_3, \cdots, 2_r)$

request for position information and service information

service information advertisement information

service information, advertisement information

register of service providing area

commercial transaction supporting server

$52_1 (52_2, 52_3, \cdots, 52_s)$

53 — behavior information management server

position information transmitting state

position information

58a — registered state judging program storing area

58b — area judging program storing area

58

behavior information database server

54

51;information management center